# EUROPEAN PATENT SPECIFICATION

(11) **EP 0 673 573 B1**
(45) Date of publication and mention of the grant of the patent: **03.05.2000**
(21) Application number: 94901973.1
(22) Date of filing: 14.12.1993
(51) Int. Cl.: H04L 12/56

(54) **A METHOD FOR CONGESTION MANAGEMENT IN A FRAME RELAY NETWORK AND A NODE IN A FRAME RELAY NETWORK**
ÜBERLASTUNGSVERWALTUNGSVERFAHREN IN EINEM RAHMENÜBERTRAGUNGSNETZ UND EIN KNOTEN IN EINEM RAHMENÜBERTRAGUNGSNETZ
PROCEDE DE GESTION DE L'ENCOMBREMENT DANS UN RESEAU DE TRANSMISSION DE TRAMES, ET NOEUD DE RESEAU DE TRANSMISSION DE TRAMES

(30) Priority: 14.12.1992 FI 925671
(43) Date of publication of application: 27.09.1995
(73) Proprietor: Nokia Networks Oy, 02150 Espoo (FI)
(72) Inventor: PYHÄLAMMI, Seppo, FIN-00320 Helsinki (FI); SALOVUORI, Heikki, FIN-00850 Helsinki (FI); HARJU, Esa, FIN-02210 Espoo (FI); HAVANSI, Klaus, FIN-02320 Espoo (FI); MATKASELKÄ, Jorma, FIN-01650 Vantaa (FI)
(74) Representative: Holmström, Stefan Mikael
(86) International application number: FI9300537
(87) International publication number: WO9414263

(56) References cited:
- EP-A- 0 422 717
- GB-A- 2 261 798
- US-A- 5 014 265
- US-A- 5 121 383
- US-A- 5 159 591
- E.MAIR ET AL.: "EWSP - A High Performance Packet Switching System", INTERNATIONAL CONFERENCE ON COMPUTER COMMUNICATIONS, Munich DE, 15.9.1986, vol. , no. , pages 359 to 364

## Description

The invention relates to a method for congestion management in a frame relay network, wherein frames are buffered both at the input and at the output boundary of a node, and a virtual channel associated with a frame to be transferred is determined. The invention further relates to a node in a frame relay network, comprising input buffers at the input boundary of the node and output buffers at the output boundary of the node, and means for delivering frames from the input buffer to a desired output buffer.

Congestion means a situation in which the number of transmission requests exceeds the transmission capacity at a certain network point (called a bottle-neck resource) at a specific time. Congestion usually results in overload conditions, as a result of which the buffers overflow, for instance, and so packets will be retransmitted either by the network or the subscriber. The function of congestion management (CM) is to maintain a balance between the transmission requests and the transmission capacity so that the bottle-neck resources operate on an optimal level, and the subscribers are offered service in a way that assures fairness.

Congestion management can be divided into congestion avoidance (CA) and congestion recovery (CR). Congestion avoidance methods aim at preventing the occurrence of congestion in the network by dynamically adjusting the bandwidth of the subscribers in accordance with network congestion conditions and/or by altering the network routing so that part of the traffic load of the bottle-neck resources is shifted to idle resources. The purpose of recovery methods, in turn, is to restore the operation of the bottle-neck resources to an optimal level if the avoidance methods have failed to prevent the occurrence of congestion.

The frame relay (FR) technique is a packet-switched network technique used for the transmission of frames of varying length in place of the packet-switched network connections presently in use. The protocol (X.25) applied generally in the present packet-switched networks requires plenty of processing and the transmission equipment is expensive, as a result of which the speeds also remain low. These matters are due to the fact that the X.25 standard was developed when the used transmission connections were still rather prone to transmission errors. The starting point of the frame relay technique was a considerably lower transmission line error probability. It has therefore been possible to discard a number of unnecessary functions in the frame relay technique, thus making the delivery of frames rapid and efficient. The Frame Mode Bearer Service is described generally in the CCITT specification I.233 (Reference 1) and the associated protocol in the specification 0.922 (Reference 2). Congestion in an FR network and congestion management mechanisms are described in the CCITT specification 1.370 (Reference 3). For a more detailed description of the FR technique, An *Overview of Frame Relay Technology*, Datapro Management of Data Communications, McGraw-Hill Incorporated, April 1991, (Reference 4) as well as the above-mentioned specifications are referred to.

The recommendations defined in the CCITT specifications offer a few mechanisms for congestion notification. For instance, the recommendation I.370 shares the network congestion management between the nodes and the subscribers of the network. According to it, the subscriber should adjust the amount of traffic on the basis of congestion notifications received from the network, and the network, in turn, should do the same on the basis of congestion notifications received from the subscriber. In other words, if the network notifies the subscriber of congestion, the subscriber should reduce its traffic to the network, and *vice versa*. This co-operation would thus make the network a kind of closed system as far as the congestion management is concerned. However, this kind of congestion management is not operative in practice, mainly for two reasons:
- notification mechanisms offered by the specification are too slow to respond to momentary congestion situations; and
- one cannot rely on the subscribers voluntarily reducing traffic even if they receive congestion notifications from the network. In such a case the congestion management system is not, in fact, closed, and congestion will not be relieved.

Another drawback of known methods is that all subscribers are treated equally under congestion conditions, and so it is not possible to give priority to the messages of subscribers wanting better service (i.e. applications requiring better service) with respect to the most important application parameters.

The document "EWSP - A High Performance Packet Switching System", by Mair, E et al., from the Proceedings of the 8th International Conference on Computer Communications, September 15-19, 1986, Munich, DE, pp 359-364, discloses a method for congestion management according to the preamble of claim 1 and a node in a frame relay network according to the preamble of claim 6.

US-A-5121383 discloses a switching node comprising buffers at the output boundary of the node, each output buffer dedicated to a network service having a specific loss priority classification.

US-A-5014265 discloses a congestion control apparatus in which buffer space in a single central buffer is allocated for each virtual circuit, the buffer space allocation being dynamically changeable.

The object of the present invention is to eliminate the above-described disadvantages and provide a new congestion management method for use in the FR network, which method is reliable and capable of rapid responding. The new method enables the subscriber application behind the congestion to be offered the best possible service as well as congestion management mechanisms that reduce the level of service as little as possible. This is achieved by a method according to the invention, which is characterised in that network services are classified into different service classes according to delay and frame throughput probability; frames are buffered into the input buffers specific for each of said service classes at the input boundary of the node; and frames are forwarded from the node through the output buffers specific for each of said service classes at the output boundary of the node. An FR network node according to the invention, in turn, is characterised in that it comprises means for storing service classes of network service classes classified according to delay and frame throughout probability, such service classes corresponding to virtual channels; buffers specific for each of said service classes provided at the input boundary of the node; and at leat one buffer for each of said service classes provided at the output boundary of the node specifically for each virtual channel.

The invention rests on the idea that the services offered in the network are classified according to the most important application parameters (throughout probability and delay) and that the delivery of frames to be transferred is performed specifically for each service class. In practice, this means e.g. that the different service classes are treated in different ways as far as buffering and congestion management are concerned, which in turn means mainly that a separate buffer is required for each service class for the application of shared resources within each access connection.

In the following the invention will be described in greater detail with reference to the examples shown in the attached drawings, in which:
Figure 1 illustrates the classification of services in an FR network according to the invention;
Figure 2 illustrates a typical operating environment of the method according to the invention;
Figure 3 is a simplified view of a node in the FR network;
Figure 4 illustrates the principal features of the configuration of a trunk node in the FR network according to the invention;
Figure 5 illustrates the format of a frame to be delivered in the FR network;
Figure 6 illustrates the principal features of a subscriber node in the FR network according to the invention;
Figure 7 illustrates the transmission of congestion notifications in the network for adjusting subscriber-specific traffic; and
Figure 8 shows the trunk node of Figure 4 with a further service class added to the network for congestion notifications.

The frame relay network supports various applications requiring services of different kinds. For example, if one generalizes to some extent, traffic between local area networks (LAN) can be divided into two portions: (a) interactive traffic, and (b) data-file transfer type traffic. In interactive traffic, relatively short packets are transferred and a rapid response is expected from the network, i.e. small delays. Transmission is usually carried out by higher-order protocols which detect transmission errors and frame losses and perform a rapid retransmission, if required.

In the datafile transfer, it is beneficial to transfer relatively large packets. The time required for the transfer is not usually critical, provided that the time-outs of the protocols will not expire.

In addition to the services described above, there is a need for a service where both delays and frame throughput probability are optimized. This kind of service requires more network node resources than the other services described above, and would, in practice, also be more expensive than the other services.

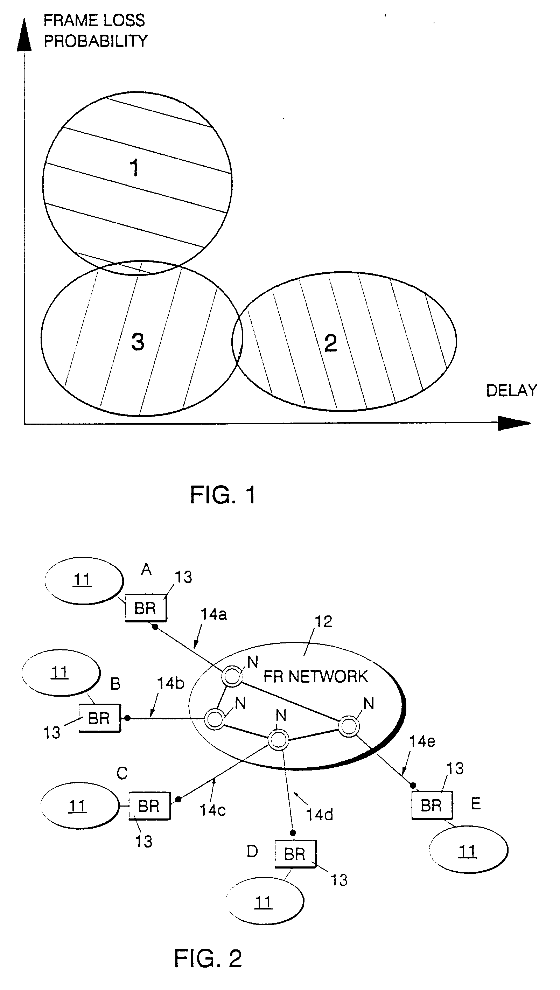

On the basis of the above, the services of the FR network can be described as shown in Figure 1, taking into account the two most important application parameters (frame loss probability and delay). Area 1 represents a service offering interactivity; area 2 represents data transfer service; and area 3 represents a service where both delays and frame throughput probability are optimized. With a low traffic rate in the FR network, the operation takes place near the origin, and the different services do not differ to any greater degree from each other. The network is able to forward all traffic, and there occur no packet losses due to congestion. However, momentary network congestion cannot be avoided, and network nodes should respond in such situations as efficiently as possible. When the traffic increases, the operation shifts farther away from the origin, and differences between the different services become apparent. Service 2 is able to utilize a long buffering time to achieve a good multiplexing result. This causes a delay to occur but this is allowable for this particular service. Service 1 is able to utilize the fact that delays must not be too long. As a last resort, frames can be discarded as congestion would anyway increase their transit delay excessively. Service 3 aims at both a short delay and a high throughput probability, and so it requires more capacity in the nodes.

Figure 2 shows an FR network offering public network services, that is, a frame relay network 12 interconnecting local area networks 11 of different offices A...E of a single corporation or a plurality of corporations. The local area network 11 of each office has access to the FR service via a local area network bridge 13 and a data link connection indicated with the references 14a...14e, respectively. The connection between an FR subscriber A...E and an FR network node is known *per se*, wherefore it will not be described more closely herein. (More detailed information about local area networks and bridges used in their interconnection can be found e.g. in an article by Michael Grimshaw *LAN Interconnections Technology*, Telecommunications, February 1991, and in *Lähiverkkoopas*, Leena Jaakonmäki, Suomen ATK-kustannus Oy, 1991.

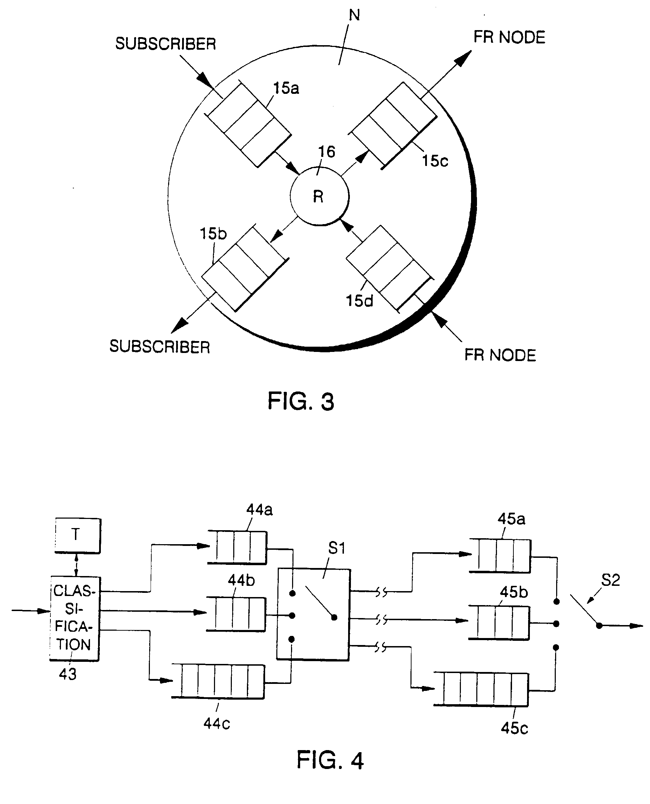

Figure 3 is a simplified view of the known structure of a node N in the FR network 12. An FR frame from a subscriber is received in an input buffer 15a, from which it is connected to a centralized router 16 routing it to an appropriate output buffer 15b or 15c, which may be either an output buffer 15b connected to another subscriber connection or an output buffer 15c connected to an FR trunk connection (which is an internodal data link connection in the FR network).

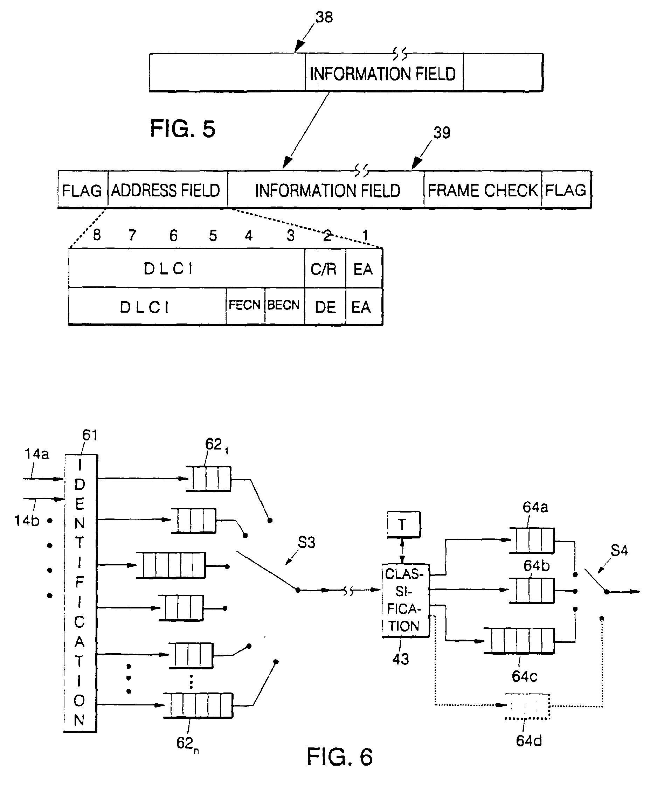

A typical feature of the node structure shown in Figure 3 is that the same buffer is used for all frames, assuming that they are routed to the same physical connection. According to the present invention, on the contrary, buffers corresponding to the above-described service classes are provided at the output boundary of all network nodes and at the input boundary having trunk connections. Figure 4 illustrates this kind of solution at a trunk node in the network. The node receives FR frames originally assembled in the bridges 13 of the subscriber connections (Figure 2). The frame of the subscriber LAN 11 is inserted into the information field of the FR frame in the bridge 13 (with the exception of timing bits and other similar bits). Figure 5 illustrates the insertion of a LAN frame 38 into the information field of an FR frame 39. It also shows a typical FR network frame format where the address field preceding the information field comprises two octets (bits 1 to 8). The bits 3 to 8 of the first octet and the bit 5 to 8 of the second octet form a data link connection identifier DLCI, which indicates to the node e.g. the virtual connection and virtual channel to which a particular frame belongs. The virtual channels are distinguished from each other by means of the data link connection identifier. The data link connection identifier, however, is unambiguous only over a single virtual channel, and it may change in the node on transition to the next virtual channel. In the invention, the bit 2 of the second address field octet, called a DE bit (Discard Eligibility Indicator), is also significant. In accordance with the CCITT recommendation, it is allowable to discard a frame e.g. under congestion conditions if the DE bit of the frame has been set to one. For instance, in the service class 1, which tolerates a higher frame loss probability than the other service classes, such frames are discarded more readily than in the other classes as the congestion would anyway increase the transit delay of the frames excessively. As the other bits in the FR frame are not relevant to the present invention, they will not be described more closely herein. References 2 and 4 mentioned above are referred to for a more detailed description.

The FR frame 39 of the format described above is received at the node by a special classification unit 43, each data link connection having its own classification unit, which reads the identifier DLCI from the address field of the frame and selects the service class (1, 2 or 3) corresponding to the virtual channel indicated by the identifier. The virtual channels and the respective service classes may be stored e.g. in a table T. (The virtual channel means a virtual connection portion having the length of one transmission interval, while the virtual connection is the actual packet-switched end-to-end FR connection.) After having completed the classification by means of the table T, the classification unit 43 applies each frame to an input buffer 44a, 44b or 44c corresponding to the specified service class of the frame. Each inbound data link connection thus comprises three input buffers, one for each service class. Each data link connection has a specific selector S1 which reads the frames from the service class specific buffers and forwards them within the node. On the output side of the trunk node, each frame 39 is applied to one of three service class specific output buffers 45a, 45b or 45c of a desired data link connection, the buffer being selected according to the service class specified on the input side of the node. A selector S2 then reads the frame further to a trunk connection. Alternatively, classification units may be provided separately for each transmission connection on the output side of the node, in which case the class data need not be transferred within the node.

In the service class 2 (buffers 44c and 45c in Figure 4), a lot of traffic can be buffered, thus making the transmission more reliable at the expense of delays. In the service class 1 (buffers 44a and 45a), the size of the buffers should be small (smaller than in class 2) and the same applies to the service class 3 (buffers 44b and 45b). (The size of the buffer is determined on the basis of the maximum delay the network is allowed to cause.) The frames thus pass through the network nodes with a small delay depending on the service.

The selectors S1 and S2 read the buffers in proportion to the traffic allocated to them, so that the fairness principle will be met, or by applying some other suitable principle so that the agreed service will be provided. As the service class 3 further involves a promise of a lower loss probability under congestion conditions, the buffers 44b and 45b have to be read with a higher priority than the other buffers (for example, more frequently than the other buffers). In addition, when the fill rate of each service class specific buffer exceeds a predetermined limit, the discarding of preferentially frames having their DE bit set (to one) can be started.

Figure 6 illustrates a subscriber node N according to the invention (i.e. a node to which subscribers are connected). Subscriber connections 14a, 14b, etc. are connected to an identification unit 61 which receives FR frames which are of the type described above and have been assembled in the bridges 13 (Figure 2). The identification unit 61 reads the identifier DLCI from the address field of the frame and forwards the frame to an input buffer 62₁...62ₙ corresponding to the virtual connection indicated by the identifier. Each data link connection has a specific selector S3 which selects frames from the input buffers of each virtual channel and forwards them within the node.

On the output side of the node, frames are applied to the above-described classification unit 43, each data link connection having its own classification unit, which reads the identifier DLCI from the address field of the frame and selects from table T the service class corresponding to the virtual channel indicated by the identifier. After .having completed the classification, the classification unit 43 applies each frame to an output buffer 64a, 64b or 64c corresponding to the frame's service class. Each outbound data link connection thus has three output buffers, one for each service class. The selector S2 selects the frames from the service class specific output buffers 64a...64c and forwards them to the data link connection. (The function of the fourth service class buffer drawn by broken lines in the figure will be described more closely below.)

Traffic transmitted by the subscribers over the FR network is thus buffered on the input side of the subscriber node specifically for each virtual connection. Incoming frames 39 are chained dynamically over each virtual connection. Depending on the service class of the virtual connection, the chain length has a predetermined allowable maximum value; this is smaller in service classes 1 and 3 and greater in service class 2. The selector S3 reads the buffers 62₁...62ₙ e.g. in proportion to the amount of traffic allocated to them, thus meeting the fairness principle, or by applying some other suitable principle so as to provide the agreed service.

On the output side of the subscriber node, the service class specific buffers are utilized in the same way as in the trunk node.

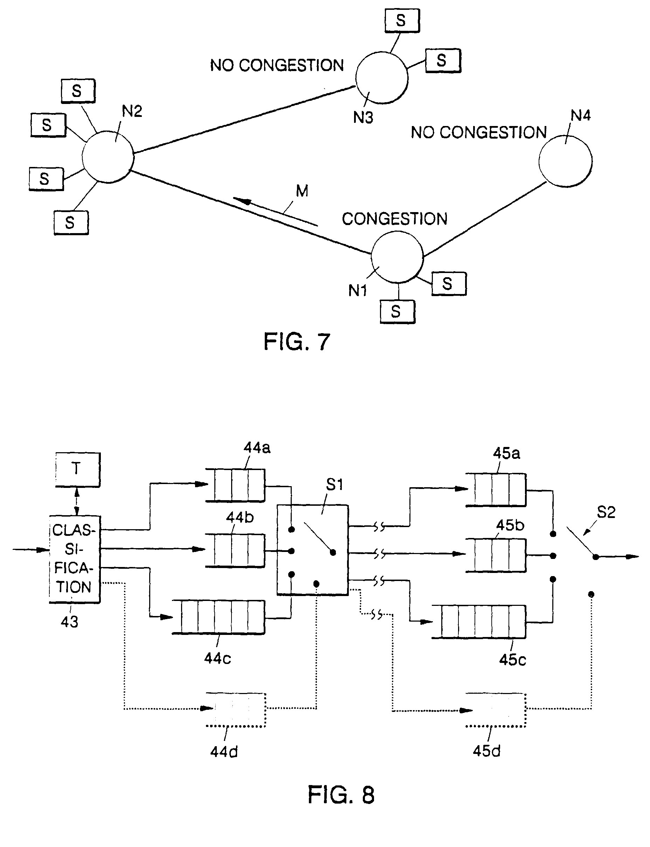

According to a preferred embodiment of the invention, the service to be provided in each service class can be further improved so that when a network node is congested, one attempts to reduce the amount of traffic over the virtual connections passing through the node already at the source end of the network in the subscriber node of the particular virtual connections. Accordingly, frames will not load the other network resources only to be discarded on reaching the congested node. This mechanism operates in the following way (Cf. Figure 7). When the output buffers in a network node, say a node N1, exceed a predetermined fill rate, the node transmits a special congestion notification M in a backward direction to the subscriber nodes (node N2 in the figure); the amount of traffic transmitted to the network over the virtual connections is thus reduced by buffering such traffic into the virtual-channel-specific buffers 62₁...62ₙ to such an extent as possible. After a while, if no further congestion notifications are received, the amount of traffic through this particular resource may again be increased. By monitoring traffic specifically for each subscriber by utilizing the congestion notifications, the amount of traffic to a congested resource can be reduced in order to relieve congestion.

In practice, the adjustment of the amount of traffic in the subscriber node is performed entirely (in compliance with the fairness principle) by monitoring the traffic of each subscriber (S) specifically for each virtual connection by means of parameters CIR (Committed Information Rate), B_{c} (Committed Burst Size) and Bₑ (Excess Burst Size), and by responding to the above-described congestion notifications M by restricting the transmission of traffic to the network over certain virtual connections in order to relieve congestion. CIR represents the data transmission rate guaranteed by the network under normal conditions; B_{c} represents a maximum amount of data the subscriber can transmit over the network within a time slot T_{c}; and Bₑ represents the amount of data by which the subscriber can exceed the value B_{c} within the time slot T_{c}. These parameters are described e.g. in Reference 3.

Congestion notifications M should be forwarded to the egress nodes very rapidly for rapid responding under congestion conditions. According to the preferred embodiment of the invention, a fourth service class is dedicated to such congestion notifications, and respective buffers are provided for the service class in the nodes. For the trunk node, this embodiment is shown in Figure 8, where the buffers 44d and 45d of the service class of congestion notifications are drawn by broken lines. Correspondingly, a fourth output buffer 64d is incorporated on the output side of the subscriber node (Figure 6).

The mechanism described above makes the FR network a closed system as far as the congestion management is concerned. When a congestion notification M is transmitted in a backward direction to the subscriber nodes sufficiently early before the node is severely congested, the network and network traffic can be "tuned" flexibly in this way to achieve an optimal throughput capacity. The service class specific buffers ensure that each service class is treated in a way best suited for its characteristic features even under congestion conditions.

Even though the invention has been described above with reference to the examples of the attached drawings, it is obvious that the invention is not restricted to it but it may be modified within the inventive idea disclosed above and in the attached claims. For example, the internal structural details of the nodes may vary in many ways even though the service classes and respective buffers are implemented in accordance with the inventive idea. It is further to be noted that the above-described way is used in the nodes to forward only frames the integrity of which has been checked and in which no errors have been detected and the DLCI has been defined for the link in question. If errors are detected or it is found out that the DLCI has not been defined for the link in question, the frame is discarded. As these stages, however, do not fall within the idea of the invention, they have not been described above.

## Claims

1. Method for congestion management in a frame relay network, in which method frames (39) are buffered both at the input and at the output boundary of a node of the network, and are transferred from input buffers to output buffers, and a virtual channel associated with each of said frames (39) to be transferred is determined, characterised in that
- network services are classified into different service classes (1,2,3) according to delay and frame throughput probability;
- frames are buffered into the input buffers specific for each of said service classes at the input boundary of the node (44a...44d); and
- frames are forwarded from the node through the output buffers (45a...45d), specific for each of said service classes at the output boundary of the node.

2. Method according to claim 1, characterised in that the network services are divided into three main service classes so that the first service class (1) offers interactive service where delays are kept short; the second service class (2) offers a low frame loss probability while delays are less critical; and the third service class (3) offers both a short delay and a low frame loss probability.

3. Method according to claim 1, characterised in that the buffers of the third service class are read more frequently than those of the other service classes.

4. Method according to claim 1, 2 or 3 characterised in that frames are buffered into buffers (62₁...62ₙ) specific for each virtual channel at the input boundary of the node.

5. Method according to claim 4, characterised in that a further service class is dedicated to congestion notifications (M) transmitted from each congested resource to the egress node of a particular virtual connection, traffic from a subscriber (S) being adjusted in the egress node by buffering frames into the virtual channel specific buffers (62₁...62ₙ)

6. Node in a frame relay network, comprising input buffers at the input boundary of the node and output buffers at the output boundary of the node, and means (16) for forwarding frames from the input buffer to a desired output buffer, characterised in that it comprises
- means (T) for storing service classes (1,2,3) of network service classes classified according to delay and frame throughput probability, such service classes corresponding to virtual channels;
- buffers (44a...44d) specific for each of said service classes provided at the input boundary of the node; and
- at least one buffer (45a...45d), for each of said service classes provided at the output boundary of the node specifically for each virtual channel.

7. Node according to claim 6, characterised in that buffers (62₁...62ₙ) specific for each virtual channel are provided at the input boundary of the node.

8. Node according to any of claims 6 or 7, characterised in that the buffers of the service classes offering a delay shorter than that offered by the other service classes are shorter than the buffers of the other service classes.

## Patentansprüche

1. Überlastungsverwaltungsverfahren in einem Rahmenübertragungsnetzwerk, in dem Rahmen (39) sowohl an der Eingangs- als auch an der Ausgangsgrenze eines Netzwerkknotens gepuffert werden und von Eingangspuffern zu Ausgangspuffern übertragen werden sowie ein jedem der zu übertragenden Rahmen (39) zugeordneter virtueller Kanal bestimmt wird,
**dadurch gekennzeichnet, dass**
Netzwerkdienste in verschiedene Dienstklassen (1, 2, 3) entsprechend einer Verzögerung und einer Rahmendurchsatzwahrscheinlichkeit klassifiziert werden,
Rahmen an der Knoteneingangsgrenze in die für jede der Dienstklasse spezifischen Eingangspuffer (44a ... 44d) gepuffert werden, und
Rahmen an der Ausgangsgrenze des Knotens aus dem Knoten über die für jede Dienstklasse spezifische Ausgangspuffer (45a ... 45d) weitergeleitet werden.

2. Verfahren nach Anspruch 1, **dadurch gekennzeichnet, dass** die Netzwerkdienste in drei Hauptdienstklassen derart unterteilt sind, dass die erste Dienstklasse (1) einen interaktiven Dienst bietet, in dem Verzögerungen kurz gehalten werden, die zweite Dienstklasse (2) eine geringe Rahmenverlustwahrscheinlichkeit bietet, während Verzögerungen weniger kritisch sind, und die dritte Dienstklasse (3) sowohl eine kurze Verzögerung als auch eine geringe Rahmenverlustwahrscheinlichkeit bietet.

3. Verfahren nach Anspruch 1, **dadurch gekennzeichnet, dass** die Puffer der dritten Dienstklasse häufiger als die der anderen Dienstklassen gelesen werden.

4. Verfahren nach Anspruch 1, 2 oder 3, **dadurch gekennzeichnet, dass** Rahmen an der Knoteneingangsgrenze in für jeden virtuellen Kanal spezifische Puffer (62₁ ... 62ₙ) gepuffert werden.

5. Verfahren nach Anspruch 4, **dadurch gekennzeichnet, dass** eine weitere Dienstklasse Überlastungsmitteilungen (M) gewidmet ist, die von jeder überlasteten Quelle zu dem Ausgangsknoten eine besonderen virtuellen Verbindung gesendet werden, wobei der Verkehr von einem Teilnehmer (S) in dem Ausgangsknoten durch Puffern von Rahmen in die für den virtuellen Kanal spezifischen Puffer (621 ... 62n) eingestellt wird.

6. Knoten in einem Rahmenübertragungsnetzwerk, mit Eingangspuffern an der Eingangsgrenze des Knotens und Ausgangspuffern an der Ausgangsgrenze des Knotens sowie Einrichtungen (16) zum Weiterleiten von Rahmen aus dem Eingangspuffer zu einem gewünschten Ausgangspuffer,
**gekennzeichnet durch**
eine Einrichtung (T) zum Speichern von Dienstklassen (1, 2, 3) von Netzwerkdienstklassen, die entsprechend einer Verzögerung und einer Rahmendurchsatzwahrscheinlichkeit klassifiziert sind, wobei derartige Dienstklassen virtuellen Kanälen entsprechen,
Puffer (44a, 44d), die für jeden der Dienstklassen spezifisch sind und an der Eingangsgrenze des Knotens vorgesehen sind, und
zumindest einen Puffer (45a ... 45d) für jeden der Dienstklassen, der an der Ausgangsgrenze des Knotens speziell für jeden virtuellen Kanal vorgesehen ist.

7. Knoten nach Anspruch 6, **dadurch gekennzeichnet, dass** an der Eingangsgrenze des Knotens Puffer (621 ... 62n) vorgesehen sind, die spezifisch für jeden virtuellen Kanal sind.

8. Knoten nach einem der Ansprüche 6 oder 7, **dadurch gekennzeichnet, dass** die Puffer der Dienstklassen, die eine kürzere Verzögerungszeit als die von den anderen Dienstklassen angebotene Verzögerung ist, kleiner als die Puffer der anderen Dienstklassen sind.

## Revendications

1. Procédé de gestion de saturation dans un réseau à relais de trames, procédé dans lequel des trames (39) sont mises en mémoire tampon à la fois à la limite d'entrée et à la limite de sortie d'un noeud du réseau, et sont transférées de mémoires tampons d'entrée vers des mémoires tampons de sortie, et une voie virtuelle associée à chacune desdites trames (39) à transférer est déterminée, caractérisé en ce que
- les services du réseau sont classés en différentes classes (1, 2, 3) de services selon le temps d'attente et la probabilité de débit de trames ;
- des trames sont mises en mémoire tampon dans les mémoires tampons d'entrée spécifiques de chacune desdites classes de services à la limite d'entrée du noeud (44a...44d) ; et
- des trames sont acheminées depuis le noeud via les mémoires tampons de sortie (45a...45d) spécifiques de chacune desdites classes de services à la limite de sortie du noeud.

2. Procédé selon la revendication 1, caractérisé en ce que les services du réseau sont divisés en trois classes principales de services de façon que la première classe (1) de services offre un service interactif où les temps d'attente restent courts ; la deuxième classe (2) de services offre une faible probabilité de perte de trames, tandis que les temps d'attente sont moins essentiels ; et la troisième classe (3) de services offre à la fois un temps d'attente court et une faible probabilité de perte de trames.

3. Procédé selon la revendication 1, caractérisé en ce que les mémoires tampons de la troisième classe de services sont lues plus fréquemment que celles des autres classes de services.

4. Procédé selon la revendication 1, 2 ou 3, caractérisé en ce que des trames sont mises en tampon dans des mémoires tampons (62₁...62ₙ) spécifiques de chaque voie virtuelle à la limite d'entrée du noeud.

5. Procédé selon la revendication 4, caractérisé en ce qu'une autre classe de service est consacrée spécialement à des notifications (M) de saturation transmises par chaque ressource saturée au noeud de sortie d'une connexion virtuelle particulière, le trafic depuis un abonné (S) étant réglé en mode sortie en mettant en tampon des trames dans les mémoires tampons (62₁...62ₙ) spécifiques de voies virtuelles.

6. Noeud dans un réseau à relais de trames, comportant des mémoires tampons d'entrée à la limite d'entrée du noeud et des mémoires tampons de sortie à la limite de sortie du noeud, et un moyen (16) pour acheminer des trames depuis la mémoire tampon d'entrée jusqu'à une mémoire tampon de sortie voulue, caractérisé en ce qu'il comprend
- un moyen (T) pour stocker des classes (1, 2, 3) de services de classes de services de réseau classées selon le temps d'attente et la probabilité de débit de trames, ces classes de services correspondant à des voies virtuelles;
- des mémoires tampons (44a...44d) spécifiques pour chacune desdites classes de services, présentes à la limite d'entrée du noeud ; et
- au moins une mémoire tampon (45a...45d) pour chacune desdites classes de services, présente à la limite de sortie du noeud d'une manière spécifique pour chaque voie virtuelle.

7. Noeud selon la revendication 6, caractérisé en ce que des mémoires tampons (62₁...62ₙ) spécifiques pour chaque voie virtuelle sont présentes à la limite d'entrée du noeud.

8. Noeud selon l'une quelconque des revendications 6 ou 7, caractérisé en ce que les mémoires tampons des classes de services offrant un temps d'attente plus court que celui offert par les autres classes de services sont plus courtes que les mémoires tampons des autres classes de services.
